# EUROPEAN PATENT SPECIFICATION

(11) **EP 2 063 732 B1**
(45) Date of publication and mention of the grant of the patent: **31.10.2018**
(21) Application number: 07840938.0
(22) Date of filing: 14.08.2007
(51) Int. Cl.: A43B 13/18, A43B 13/20, B29D 35/12, B29D 35/14

(54) **FLUID-FILLED BLADDER INCORPORATING A FOAM TENSILE MEMBER**
FLUIDGEFÜLLTE BLASE MIT EINEM SCHAUMSTOFFZUGGLIED
VESSIE REMPLIE DE FLUIDE ET COMPRENANT UN ÉLÉMENT DE TRACTION EN MOUSSE

(30) Priority: 19.09.2006 US 523755
(43) Date of publication of application: 03.06.2009
(73) Proprietor: NIKE Innovate C.V., Beaverton, OR 97005-6453 (US)
(72) Inventor: SCHINDLER, Eric S., Beaverton, OR 97005-6453 (US)
(74) Representative: Tombling, Adrian George
(86) International application number: PCT/US2007/075914
(87) International publication number: WO 2008/036483

(56) References cited:
- FR-A- 2 184 061
- US-A1- 2003 096 661
- US-A1- 2005 167 029
- US-A1- 2005 183 287

## Description

### BACKGROUND OF THE INVENTION

A conventional article of athletic footwear includes two primary elements, an upper and a sole structure. The upper provides a covering for the foot that securely receives and positions the foot with respect to the sole structure. In addition, the upper may have a configuration that protects the foot and provides ventilation, thereby cooling the foot and removing perspiration. The sole structure is secured to a lower surface of the upper and is generally positioned between the foot and the ground. In addition to attenuating ground reaction forces and absorbing energy (i.e., imparting cushioning), the sole structure may provide traction and control potentially harmful foot motion, such as over pronation. Accordingly, the upper and the sole structure operate cooperatively to provide a comfortable structure that is suited for a wide variety of ambulatory activities, such as walking and running. The general features and configuration of the upper and the sole structure are discussed in greater detail below.

The sole structure of athletic footwear generally exhibits a layered structure that includes a comfort-enhancing insole, a resilient midsole formed from a polymer foam, and a ground-contacting outsole that provides both abrasion-resistance and traction. Suitable polymer foam materials for the midsole include ethylvinylacetate or polyurethane that compress resiliently under an applied load to attenuate ground reaction forces and absorb energy. Conventional foam materials are resiliently compressible, in part, due to the inclusion of a plurality of open or closed cells that define an inner volume substantially displaced by gas. That is, the foam includes bubbles formed in the material that enclose the gas. Following repeated compressions, however, the cell structure may deteriorate, thereby resulting in decreased compressibility of the foam. Thus, the force attenuation and energy absorption characteristics of the midsole may decrease over the lifespan of the footwear.

One way to overcome the drawbacks of utilizing conventional foam materials is disclosed in U.S. Patent Number 4,183,156 to Rudy, in which cushioning is provided by inflatable inserts formed of elastomeric materials. The inserts include a plurality of tubular chambers that extend substantially longitudinally throughout the length of the footwear. The chambers are in fluid communication with each other and jointly extend across the width of the footwear. U.S. Patent Number 4,219,945 to Rudy discloses an inflated insert encapsulated in a foam material. The combination of the insert and the encapsulating material functions as a midsole. An upper is attached to the upper surface of the encapsulating material and an outsole or tread member is affixed to the lower surface.

Such bladders are generally formed of an elastomeric material and are structured to have an upper or lower surface that encloses one or more chambers therebetween. The chambers are pressurized above ambient pressure by inserting a nozzle or needle connected to a fluid pressure source into a fill inlet formed in the bladder. After the chambers are pressurized, the fill inlet is sealed, for example, by welding, and the nozzle is removed.

Bladders of this type have been manufactured by a two-film technique, in which two separate sheets of elastomeric film are formed to exhibit the overall peripheral shape of the bladder. The sheets are then welded together along their respective peripheries to form a sealed structure, and the sheets are also welded together at predetermined interior areas to give the bladder a desired configuration. That is, the interior welds provide the bladder with chambers having a predetermined shape and size at desired locations. Such bladders have also been manufactured by a blow-molding technique, wherein a liquefied elastomeric material is placed in a mold having the desired overall shape and configuration of the bladder. The mold has an opening at one location through which pressurized air is provided. The pressurized air forces the liquefied elastomeric material against the inner surfaces of the mold and causes the material to harden in the mold, thereby forming a bladder with the desired shape and configuration.

Another type of prior art bladder suitable for footwear applications is disclosed in U.S. Patent Numbers 4,906,502 and 5,083,361, both to Rudy. This type of bladder is formed as a fluid pressurized and inflated structure that comprises a hermetically sealed outer barrier layer which is securely fused substantially over the entire outer surfaces of a tensile member having the configuration of a double-walled fabric core. The tensile member is comprised of first and second outer fabric layers that are normally spaced apart from one another at a predetermined distance. Connecting or drop yarns, potentially in the form of multi-filament yarns having many individual fibers, extend internally between the proximal or facing surfaces of the respective fabric layers. The filaments of the drop yarns form tensile restraining means and are anchored to the respective fabric layers. A suitable method of manufacturing the double walled fabric structure is double needle bar raschel knitting.

U.S. Patent Numbers 5,993,585 and 6,119,371, both issued to Goodwin et al. disclose a bladder utilizing a tensile member, but without a peripheral seam located midway between the upper and lower surfaces of the bladder. Instead, the seam is located adjacent to the upper surface of the bladder. Advantages in this design include removal of the seam from the area of maximum sidewall flexing and increased visibility of the interior of the bladder, including the connecting yarns. The process utilized to form a bladder of this type involves the formation of a shell, which includes a lower surface and a sidewall, with a mold. A tensile member is placed on top of a covering sheet, and the shell, following removal from the mold, is placed over the covering sheet and tensile member. The assembled shell, covering sheet, and tensile member are then moved to a lamination station where radio frequency energy fuses opposite sides of the tensile member to the shell and covering sheet and fuses a periphery of the shell to the covering sheet. The bladder is then pressurized by inserting a fluid so as to place the connecting yarns in tension.

While the cushioning benefits of bladders in articles of footwear are well documented, the prior art methods of producing bladders utilizing a double-walled fabric core have made them costly and time consuming to manufacture. For example, the double-walled fabric core is typically secured within the bladder by attaching a layer of thermally activated fusing agent to the outer surfaces of the core, and then heating the bladder components to cause the fusing agent to melt, thereby securing the core the outer layers of the bladder. In practice, it is time consuming to add the fusing agent to the outer surfaces of the core and requires additional manufacturing steps, thereby increasing overall cost. Accordingly, the art requires a simple, more cost-effective bladder with a tensile member. Document US 2005/0183287 discloses a method for manufacturing a foam tensile member for a fluid-filled bladder; US 2003/0096661 discloses a mould for manufacturing golf balls, wherein the mould is made from a porous metal material.

### SUMMARY OF THE INVENTION

The present invention is a method for manufacturing a polymer foam tensile element for a fluid-filled bladder, and a mould for manufacturing such a polymer foam tensile element.

### DESCRIPTION OF THE DRAWINGS

The foregoing Summary of the Invention, as well as the following Detailed Description of the Invention, will be better understood when read in conjunction with the accompanying drawings.
Figure 1 is a lateral elevational view of an article of footwear incorporating a first bladder.
Figure 2 is a perspective view of the first bladder.
Figure 3 is a side elevational view of the first bladder.
Figure 4 is a top plan view of the first bladder.
Figure 5A is a first cross-sectional view of the first bladder, as defined along section line 5A-5A in Figure 4.
Figure 5B is a second cross-sectional view of the first bladder, as defined along section line 5B-5B in Figure 4.
Figure 6 is a perspective view of a tensile member portion of the first bladder.
Figure 7 is a perspective view of a second bladder.
Figure 8 is a side elevational view of the second bladder.
Figure 9 is a top plan view of the second bladder.
Figure 10A is a first cross-sectional view of the second bladder, as defined along section line 10A-10A in Figure 9.
Figure 10B is a second cross-sectional view of the second bladder, as defined along section line 10B-10B in Figure 9.
Figure 11 is a perspective view of a tensile member portion of the second bladder.
Figure 12 is a lateral elevational view of an article of footwear incorporating a third bladder.
Figure 13 is a perspective view of the third bladder.
Figure 14 is a side elevational view of the third bladder.
Figure 15 is a front elevational view of the third bladder.
Figure 16 is a back elevational view of the third bladder.
Figure 17 is a top plan view of the third bladder.
Figure 18A is a first cross-sectional view of the third bladder, as defined along section line 18A-18A in Figure 17.
Figure 18B is a second cross-sectional view of the third bladder, as defined along section line 18B-18B in Figure 17.
Figure 19 is a perspective view of a tensile member portion of the third bladder.
Figure 20 is a perspective view of a fourth bladder.
Figure 21 is a side elevational view of the fourth bladder.
Figure 22A is a first cross-sectional view of the fourth bladder, as defined along section line 22A-22A in Figure 21.
Figure 22B is a second cross-sectional view of the fourth bladder, as defined along section line 22B-22B in Figure 21.
Figure 23 is a perspective view of a tensile member portion of the fourth bladder.
Figure 24 is a perspective view of a fifth bladder.
Figure 25 is a side elevational view of the of the fifth bladder.
Figure 26A is a first cross-sectional view of the fifth bladder, as defined along section line 26A-26A in Figure 25.
Figure 26B is a second cross-sectional view of the fifth bladder, as defined along section line 26B-26B in Figure 25.
Figure 27 is a perspective view of a sixth bladder.
Figure 28 is a side elevational view of the of the sixth bladder.
Figure 29A is a first cross-sectional view of the sixth bladder, as defined along section line 29A-29A in Figure 28.
Figure 29B is a second cross-sectional view of the sixth bladder, as defined along section line 29B-29B in Figure 28.
Figures 30 and 31 are a perspective views of cellular structure metal materials.
Figure 32 is a perspective view of a mold that is formed from a cellular structure metal material according to the invention.
Figure 33 is a perspective view of a mold that is partially formed from a cellular structure metal material.
Figure 34 is a cross-sectional view of the mold depicted in Figure 33, as defined by section line 34 in Figure 33.

### DETAILED DESCRIPTION OF THE INVENTION

The following discussion and accompanying figures disclose various articles of athletic footwear incorporating a fluid-filled bladder in accordance with the present invention. Concepts related to the footwear, and more particularly the fluid-filled bladders, are disclosed with reference to footwear having a configuration that is suitable for running. The invention is not solely limited to footwear designed for running, however, and may be applied to a wide range of athletic footwear styles, including basketball shoes, cross-training shoes, walking shoes, tennis shoes, soccer shoes, and hiking boots, for example. In addition, the invention may also be applied to footwear styles that are generally considered to be non-athletic, including dress shoes, loafers, sandals, and work boots. Accordingly, one skilled in the relevant art will recognize that the concepts disclosed herein apply to a wide variety of footwear styles, in addition to the specific style discussed in the following material and depicted in the accompanying figures.

In addition to footwear, the fluid-filled bladder may be incorporated into a variety of other products, including straps for carrying backpacks and golf bags, cushioning pads for football or hockey, or bicycle seats, for example. Although the fluid-filled bladder is suited for various types of athletic products, the fluid-filled bladder may also be incorporated into various non-athletic products, such as inflatable mattresses and pressure-sensing seat cushions, for example. Accordingly, the various fluid-filled bladders disclosed below with respect to footwear may be used in connection with a variety of products.

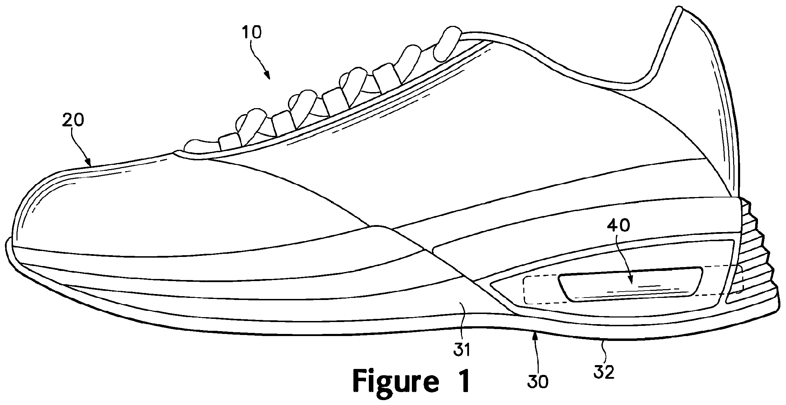

An article of footwear 10 is depicted in Figure 1 and includes an upper 20 and a sole structure 30. Upper 20 has a substantially conventional configuration and includes a plurality elements, such as textiles, foam, and leather materials, that are stitched or adhesively bonded together to form an interior void for securely and comfortably receiving the foot. Sole structure 30 is positioned below upper 20 and includes two primary elements, a midsole 31 and an outsole 32. Midsole 31 is secured to a lower surface of upper 20, through stitching or adhesive bonding for example, and operates to attenuate forces and absorb energy as sole structure 30 impacts the ground. That is, midsole 31 is structured to provide the foot with cushioning during walking or running, for example. Outsole 32 is secured to a lower surface of midsole 31 and is formed of a durable, wear-resistant material that is suitable for engaging the ground. In addition, sole structure 30 may include an insole (not depicted), which is a thin cushioning member, located within the void and adjacent to the plantar surface of the foot to enhance the comfort of footwear 10.

Midsole 31 is primarily formed of a polymer foam material, such as polyurethane or ethylvinylacetate, that encapsulates a fluid-filled bladder 40. As depicted in Figure 1, bladder 40 is positioned in a heel region of midsole 31, but may be positioned in any region of midsole 31 to obtain a desired degree of cushioning response. Furthermore, midsole 31 may encapsulate multiple fluid-filled bladders having the general configuration of bladder 40. Bladder 40 may be only partially encapsulated within midsole 31 or entirely encapsulated within midsole 31. For example, portions of bladder 40 may protrude outward from a side surface of midsole 31, or an upper surface of bladder 40 may coincide with an upper surface of midsole 31. Alternately, midsole 31 may extend over and entirely around bladder 40. Accordingly, the position of bladder 40 with respect to footwear 10 may vary significantly within the scope of the present invention.

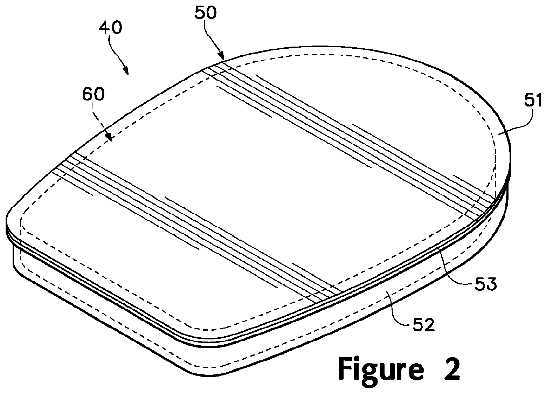

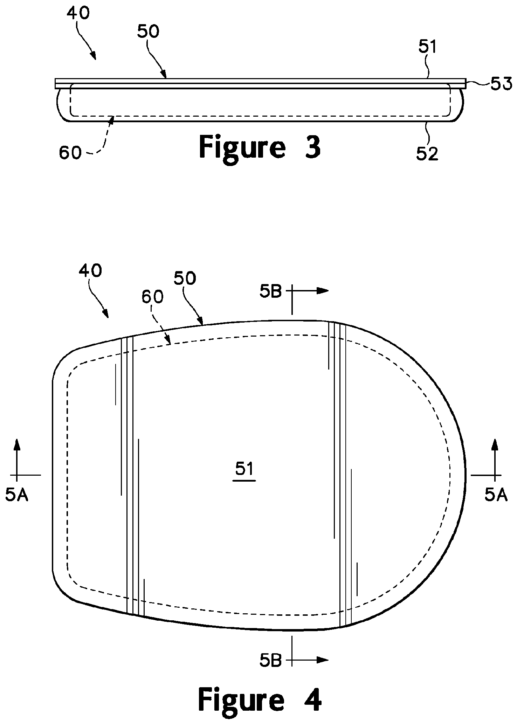

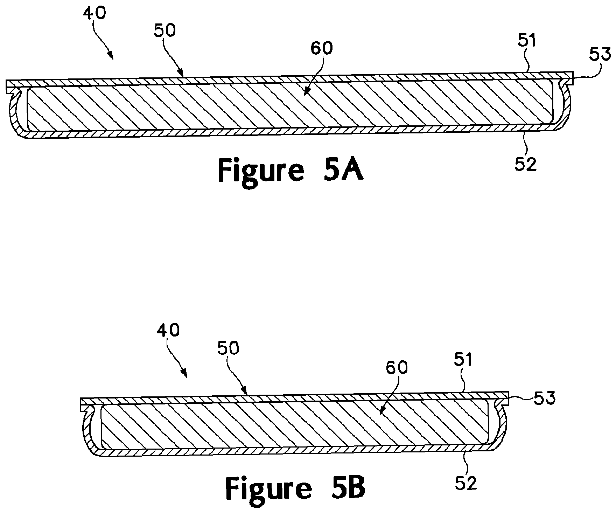

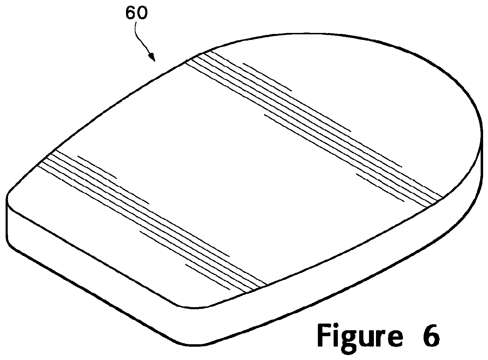

The primary elements of bladder 40, as depicted in Figures 2-6, are an outer barrier 50 and a tensile member 60. Barrier 50 includes a first barrier layer 51 and a second barrier layer 52 that are substantially impermeable to a pressurized fluid contained by bladder 40. The pressurized fluid will, therefore, generally remain sealed within bladder 40 for a duration that includes the expected life of footwear 10. First barrier layer 51 and second barrier layer 52 are bonded together around their respective peripheries to form a peripheral bond 53 and cooperatively form a sealed chamber, in which tensile member 60 and the pressurized fluid are located.

Tensile member 60 is a foam element that is bonded to each of first barrier layer 51 and second barrier layer 52. The upper and lower surface of tensile member 60 are generally planar and parallel, and tensile member 60 is depicted as having a continuous configuration that does not include any apertures or other discontinuities. In further embodiments of the invention, the upper and lower surface of tensile member 60 may be non-planar and non-parallel, and various apertures may extend through or partially through tensile member 60. In addition, the density or compressibility of the material forming various portions of tensile member 60 may vary. For example, the portion of tensile member 60 located in a lateral area of footwear 10 may exhibit a different density than the portion of tensile member 60 located in a medial area of footwear 10 in order to limit the degree of pronation in the foot during running.

The pressurized fluid contained by bladder 40 induces an outward force upon barrier 50 and tends to separate or otherwise press outward upon first barrier layer 51 and second barrier layer 52. In the absence of tensile member 60, the outward force induced by the pressurized fluid would impart a rounded or otherwise bulging configuration to bladder 40. Tensile member 60, however, is bonded to each of first barrier layer 51 and second barrier layer 52 and restrains the separation of first barrier layer 51 and second barrier layer 52. Accordingly, tensile member 60 is placed in tension by the fluid and retains the generally flat configuration of bladder 40 that is depicted in the figures.

As discussed above, tensile member 60 is bonded to each of first barrier layer 51 and second barrier layer 52. A variety of bonding methods may be employed to secure barrier 50 and tensile member 60 together, and the bonding methods may be at least partially determined by the materials selected for each of barrier 50 and tensile member 60. For example, an adhesive may be utilized to bond the components when barrier 50 is formed from a thermoplastic polymer material and tensile member 60 is formed from a thermoset polymer material. When at least one of barrier 50 and tensile member 60 are formed from a thermoplastic polymer material, however, direct bonding may be an effective manner of securing barrier 50 and tensile member 60.

As utilized within the present application, the term "direct bond", or variants thereof, is defined as a securing technique between barrier 50 and tensile member 60 that involves a melting or softening of at least one of barrier 50 and tensile member 60 such that the materials of barrier 50 and tensile member 60 are secured to each other when cooled. In general, the direct bond may involve the melting or softening of both barrier 50 and tensile member 60 such that the materials diffuse across a boundary layer between barrier 50 and tensile member 60 and are secured together when cooled. The direct bond may also involve the melting or softening of only one of barrier 50 and tensile member 60 such that the molten material extends into crevices or cavities formed by the other material to thereby secure the components together when cooled. Accordingly, a direct bond between barrier 50 and tensile member 60 does not generally involve the use of adhesives. Rather, barrier 50 and tensile member 60 are directly bonded to each other.

A variety of thermoplastic polymer materials may be utilized for barrier 50, including polyurethane, polyester, polyester polyurethane, and polyether polyurethane. Another suitable material for barrier 50 is a film formed from alternating layers of thermoplastic polyurethane and ethylene-vinyl alcohol copolymer, as disclosed in U.S. Patent Numbers 5,713,141 and 5,952,065 to Mitchell et al. A variation upon this material wherein the center layer is formed of ethylene-vinyl alcohol copolymer; the two layers adjacent to the center layer are formed of thermoplastic polyurethane; and the outer layers are formed of a regrind material of thermoplastic polyurethane and ethylene-vinyl alcohol copolymer may also be utilized. Barrier 50 may also be formed from a flexible microlayer membrane that includes alternating layers of a gas barrier material and an elastomeric material, as disclosed in U.S. Patent Numbers 6,082,025 and 6,127,026 to Bonk et al. In addition, numerous thermoplastic urethanes may be utilized, such as PELLETHANE, a product of the Dow Chemical Company; ELASTOLLAN, a product of the BASF Corporation; and ESTANE, a product of the B.F. Goodrich Company, all of which are either ester or ether based. Still other thermoplastic urethanes based on polyesters, polyethers, polycaprolactone, and polycarbonate macrogels may be employed, and various nitrogen blocking materials may also be utilized. Additional suitable materials are disclosed in U.S. Patent Numbers 4,183,156 and 4,219,945 to Rudy. Further suitable materials include thermoplastic films containing a crystalline material, as disclosed in U.S. Patent Numbers 4,936,029 and 5,042,176 to Rudy, and polyurethane including a polyester polyol, as disclosed in U.S. Patent Numbers 6,013,340; 6,203,868; and 6,321,465 to Bonk et al.

Both thermoplastic and thermoset polymer materials may be utilized for barrier 50. An advantage of utilizing a thermoplastic polymer material over a thermoset polymer material for barrier 50 is that first barrier layer 51 and second barrier layer 52 may be bonded together through the application of heat at the position of peripheral bond 53. In addition, first barrier layer 51 and second barrier layer 52 may be heated and stretched to conform to the desired shape of barrier 50. Whereas first barrier layer 51 forms the upper surface of bladder 40, second barrier layer 52 forms both the lower surface and a majority of a sidewall of bladder 40. This configuration positions peripheral bond 53 adjacent to the upper surface and promotes visibility through the sidewall. Alternately, peripheral bond 53 may be positioned adjacent to the lower surface or at a location that is between the upper surface and the lower surface. Peripheral bond 53 may, therefore, extend through the sidewall such that both first barrier layer 51 and second barrier layer 52 form substantially equal portions of the sidewall. Accordingly, the specific configuration of barrier 50 and the position of peripheral bond 53 may vary significantly within the scope of the present invention.

A variety of foam materials are suitable for tensile member 60. Thermoset polymer foams, including polyurethane and ethylvinylacetate, may be utilized with an adhesive or when the direct bond involves the melting or softening of barrier 50 such that the molten material extends into cavities formed by the foamed cells of tensile member 60. When both barrier 50 and tensile member 60 are formed of a thermoplastic polymer foam, the materials forming both components may be melted or softened such that the materials diffuse across a boundary layer between barrier 50 and tensile member 60 and are secured together upon cooling. Direct bonding may, therefore, occur between barrier 50 and tensile member 60 whether tensile member 60 is formed from a thermoset or thermoplastic polymer foam. Thermoplastic polymer foams also exhibit an advantage of having greater tear and shear properties than thermoset polymer foams, and thermoplastic polymer foams are reusable or recyclable.

With regard to thermoplastic polymer foams, one suitable material is manufactured by Huntsman International, L.L.C. under the SMARTLITE trademark. A suitable version of this thermoplastic polyurethane foam exhibits a density of 0.65 grams per cubic centimeter and a hardness of 57 on the Shore A scale. In further embodiments of the invention, a thermoplastic polyurethane foam exhibiting a density of 0.50 grams per cubic centimeter and a hardness of 85 on the Shore A scale may be utilized. Accordingly, the density and hardness of suitable polymer foams may vary significantly within the scope of the present invention. Another suitable material is produced through a process developed by Trexel, Incorporated and marketed under the MUCELL trademark. The process involves injecting a supercritical fluid, such as carbondioxide or nitrogen, into a thermoplastic polyurethane. A large number of nucleation sites are then formed in the thermoplastic polyurethane through a substantial and rapid pressure drop. The controlled growth of cells is achieved through monitoring of the pressure and temperature following the pressure drop, and the thermoplastic polyurethane is injected into a mold to form tensile member 60.

The fluid contained by bladder 40 may be any of the gasses disclosed in U.S. Patent Number 4,340,626 to Rudy, such as hexafluoroethane and sulfur hexafluoride, for example. In addition, the fluid may include pressurized octafluorapropane, nitrogen, and air. The pressure of the fluid may range from a gauge pressure of zero to fifty pounds per square inch, for example.

With reference to Figure 1, bladder 40 is at least partially encapsulated by the polymer foam material of midsole 31. During walking, running, or other ambulatory activities, midsole 31 and bladder 40 are compressed between the heel of the foot and the ground, thereby attenuating ground reaction forces and absorbing energy (i.e., imparting cushioning). As discussed above, tensile member 60 is bonded to each of first barrier layer 51 and second barrier layer 52 and is placed in tension by the pressurized fluid. As bladder 40 is compressed between the heel and the foot, therefore, bladder 40 is compressed and the tension in tensile member 60 is relieved. Upon removal of the compressive force caused by the foot and the ground, the outward force induced by the fluid returns the tension in tensile member 60.

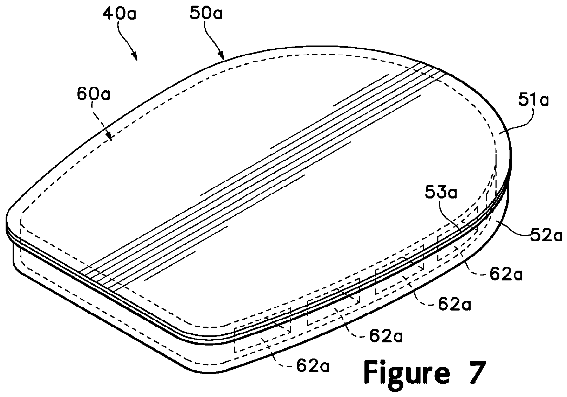

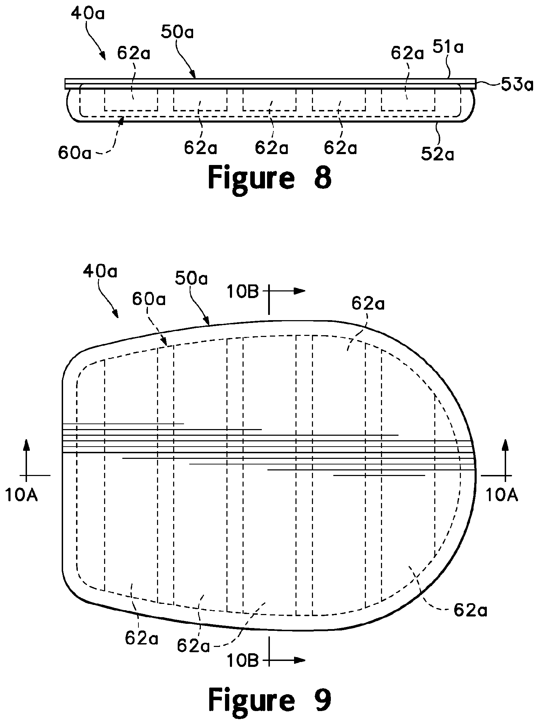

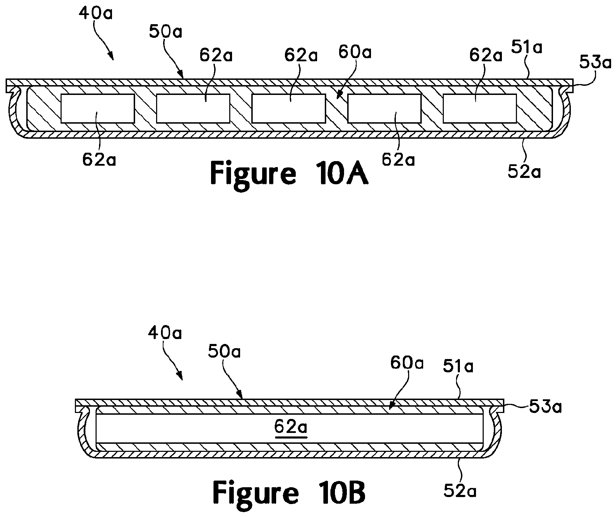

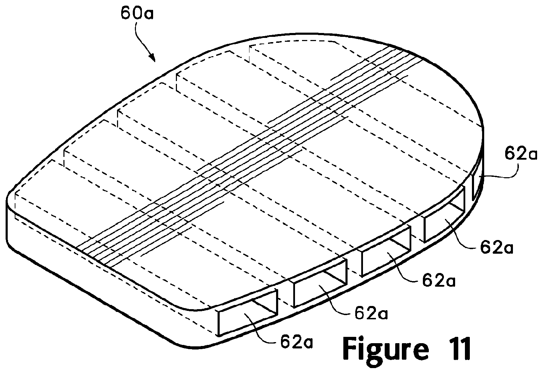

A bladder 40a is depicted in Figures 7-11 and has the general configuration of bladder 40, as discussed above. Accordingly, bladder 40a includes an outer barrier 50a and a tensile member 60a. Barrier 50a includes a first barrier layer 51a and a second barrier layer 52a that are substantially impermeable to a pressurized fluid contained by bladder 40a. First barrier layer 51a and second barrier layer 52a are bonded together around their respective peripheries to form a peripheral bond 53a and cooperatively form a sealed chamber, in which tensile member 60a and the pressurized fluid are located.

Tensile member 60a is a foam member that is bonded to each of first barrier layer 51a and second barrier layer 52a. The upper and lower surface of tensile member 60a are generally planar and parallel. In contrast with bladder 40, and more particularly tensile member 60, tensile member 60a defines five channels 62a that extend laterally through tensile member 60a. In further embodiments of the invention, the upper and lower surface of tensile member 60a may be non-planar and non-parallel, and the various channels 62a may extend longitudinally or both laterally and longitudinally through tensile member 60a.

The pressurized fluid contained by bladder 40a induces an outward force upon barrier 50a and tends to separate or otherwise press outward upon first barrier layer 51a and second barrier layer 52a. Tensile member 60a is placed in tension by the fluid and retains the generally flat configuration of bladder 40a that is depicted in the figures. As with bladder 40, direct bonding may be an effective manner of securing barrier 50a and tensile member 60a.

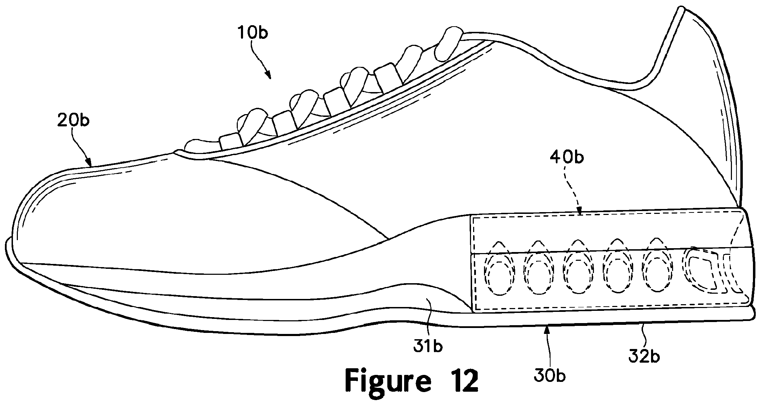

An article of footwear 10b is depicted in Figure 12 and includes an upper 20b and a sole structure 30b. Upper 20b has a substantially conventional configuration and includes a plurality elements, such as textiles, foam, and leather materials, that are stitched or adhesively bonded together to form an interior void for securely and comfortably receiving the foot. Sole structure 30b is positioned below upper 20b and includes two primary elements, a midsole 31b and an outsole 32b. Midsole 31b is secured to a lower surface of upper 20b, through stitching or adhesive bonding for example, and operates to attenuate forces and absorb energy as sole structure 30b impacts the ground.

Midsole 31b includes a bladder 40b that is positioned in a heel region of footwear 10b. A first surface of bladder 40b is secured to the lower surface of upper 20b, and an opposite second surface of bladder 40b is secured to outsole 32b. In contrast with bladder 40, therefore, bladder 40b may be separate from (i.e., not encapsulated by) the polymer foam material that forms other portions of midsole 31b. In further configurations, however, bladder 40b may be encapsulated within the polymer foam material that forms midsole 31b, or bladder 40b may extend through the longitudinal length of midsole 31b to support the entire length of the foot.

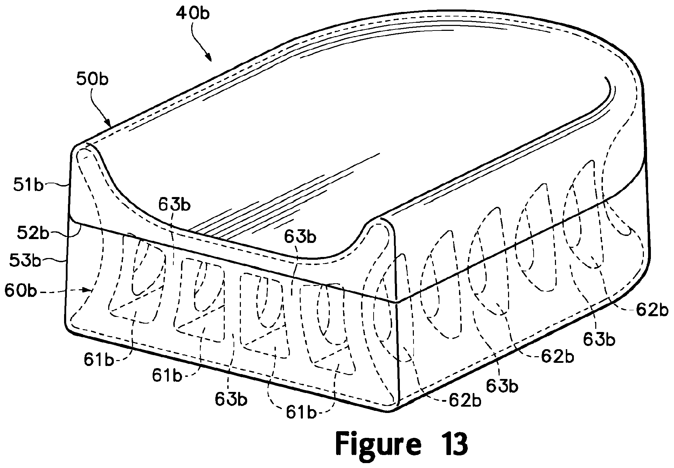

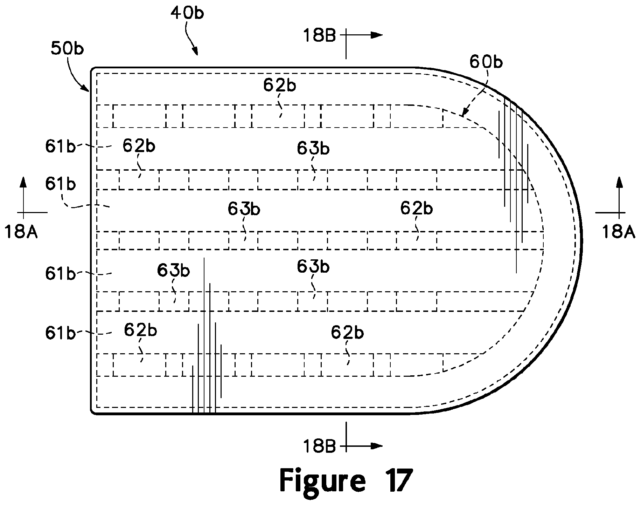

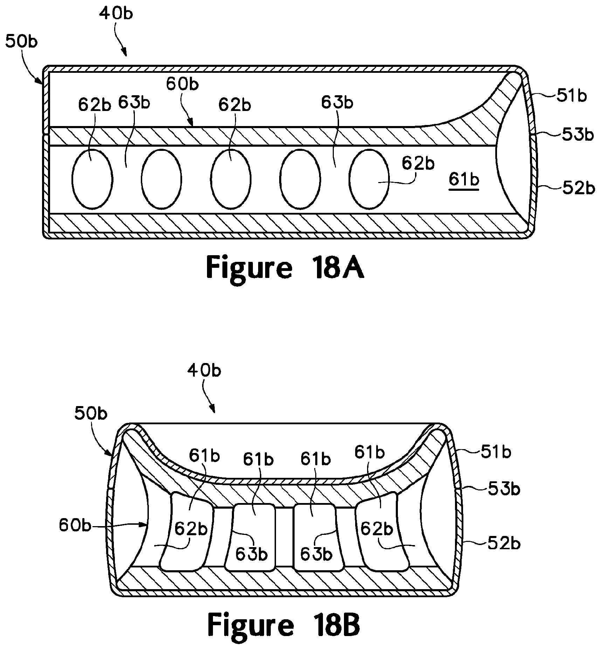

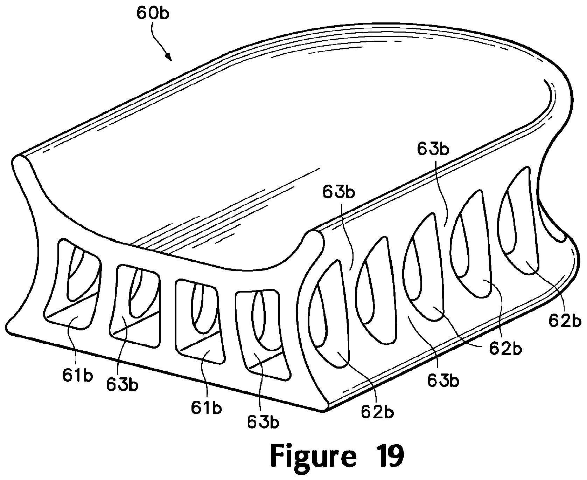

The primary elements of bladder 40b, as depicted in Figures 13-19, are an outer barrier 50b and a tensile member 60b. Barrier 50b includes a first barrier layer 51b and a second barrier layer 52b that are substantially impermeable to a pressurized fluid contained by bladder 40b. The pressurized fluid contained by bladder 40b induces an outward force upon barrier 50b and tends to separate or otherwise press outward upon first barrier layer 51b and second barrier layer 52b. Tensile member 60b, however, is bonded to each of first barrier layer 51b and second barrier layer 52b and is placed in tension by the pressurized fluid, thereby restraining outward movement of barrier 50b.

First barrier layer 51b and second barrier layer 52b are bonded together around their respective peripheries to form a peripheral bond 53b and cooperatively form a sealed chamber, in which tensile member 60b and the pressurized fluid are located. Suitable materials for barrier 50b include any of the materials discussed above with respect to barrier 50. Tensile member 60b is a polymer foam member that is bonded to barrier 50b. Although adhesive bonding may be utilized to secure barrier 50b and tensile member 60b, direct bonding may also be suitable when both barrier 50b and tensile member 60b are formed from thermoplastic polymers. Accordingly, the polymer foam material of tensile member 60b may be the thermoplastic polyurethane foam manufactured by Huntsman International, L.L.C. under the SMARTLITE trademark, or may also be the material produced through the process developed by Trexel, Incorporated and marketed under the MUCELL trademark. Other suitable foams, whether thermoplastic or thermoset, may be utilized for tensile member 60b.

Tensile member 60, as discussed above, has a configuration wherein the surfaces bonded to barrier 50 are both planar and parallel. In contrast, tensile member 60b includes an upper surface with a concave configuration, and tensile member 60b includes a lower surface that is generally planar. The concave configuration of the upper surface provides bladder 40b with a concave upper area that joins with upper 20 and forms a depression for securely receiving the heel of the wearer. Similarly, the planar lower surface provides bladder 40b with a generally planar configuration that joins with outsole 32b and forms a surface for contacting the ground. The various contours for the surfaces of tensile member 60b may vary significantly from the configuration discussed above. For example, the lower surface may incorporate a bevel in the rear-lateral corner of footwear 10, or both surfaces may be planar.

Whereas tensile member 60 extends continuously between opposite sides of barrier 50, tensile member 60b includes a plurality of intersecting channels 61b and 62b that extend through the polymer foam material. Channels 61b extend longitudinally from a front portion of tensile member 60b to a back portion of tensile member 60b. Similarly, channels 62b extend laterally between the sides of tensile member 60b. Channels 61b and 62b increase the compressibility of tensile member 60b and decrease the overall weight of bladder 40b. Although tensile member 60b is depicted as having four channels 61b and six channels 62b, any number of channels 61b and 62b are contemplated to fall within the scope of the present invention. In addition, channels 61b and 62b may extend only partially through tensile member 60b, rather than extending entirely through tensile member 60b.

Channels 61b and 62b remove portions of tensile member 60b and form a plurality of columns 63b that extend between upper and lower portions of tensile member 60b. The dimensions of columns 63b may vary significantly depending upon the quantity and dimensions of channels 61b and 62b. The dimensions of columns 63b have an effect upon the compressibility of bladder 40b, and one skilled in the relevant art may, therefore, balance various factors such as the pressure of the fluid and the dimensions of columns 63b to modify or otherwise select a suitable compressibility. Other factors that may affect the compressibility of bladder 40b include the density of the polymer foam material and the thickness of bladder 40b. The pressurized fluid within bladder 40b places tensile member 60b in tension. Although upper and lower portions of tensile member 60b are in tension, a majority of the tension is induced in columns 63b. The tension tends to stretch or otherwise elongate columns 63b. Accordingly, the dimensions of columns 63b may also be selected to limit the degree of elongation in columns 63b.

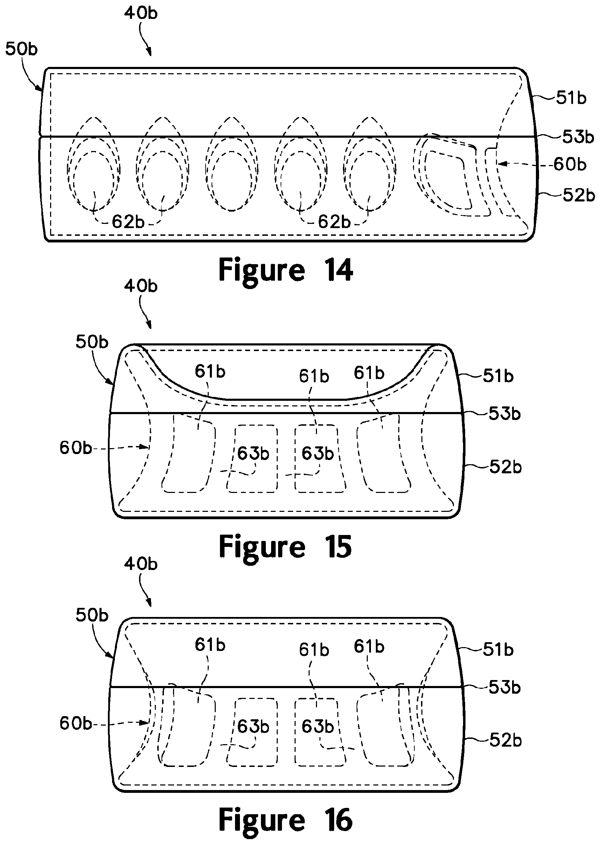

Channels 61b extend entirely along the longitudinal length of tensile member 40b and exhibit a shape that is generally rectangular, as depicted in Figures 15 and 16. Similarly, channels 62b extend entirely through the lateral width of tensile member 60b and exhibit a shape that is generally oval, as depicted in Figure 14. Although these are suitable shapes for channels 61b and 62b, the shapes of channels 61b and 62b may vary to include circular, triangular, hexagonal, or other regular or non-regular configurations. Channels 61b and 62b are also depicted as having a constant shape through the length and width of tensile member 60b, but may have a non-constant, varying shape or varying dimensions. Accordingly, the configurations of channels 61b and 62b may vary to impart different compressibilities or properties to different portions of tensile member 60b. For example, channels 61b and 62b may have greater dimensions in the rear-lateral portion of tensile member 60b in order to decrease the overall compressibility of sole structure 30b in the rear-lateral corner.

The upper and lower surfaces of tensile member 60b are bonded to barrier 50b. The side surfaces of tensile member 60b may, however, remain unbonded to barrier 50b. The sidewalls of bladder 40b may bulge or otherwise protrude outward due to the pressure of the fluid within bladder 40b. In some embodiments, the side surfaces of tensile member 60b may be entirely or partially bonded to barrier 50b.

Tensile member 60b may be formed through an injection molding process wherein the polymer foam is injected into a mold having a void with the general shape of tensile member 60b. Various removable rods may extend through the void in locations that correspond with the positions of channels 61b and 62b. Upon at least partial curing of the polymer foam, the rods may be removed and the mold may be opened to permit removal of tensile member 60b.

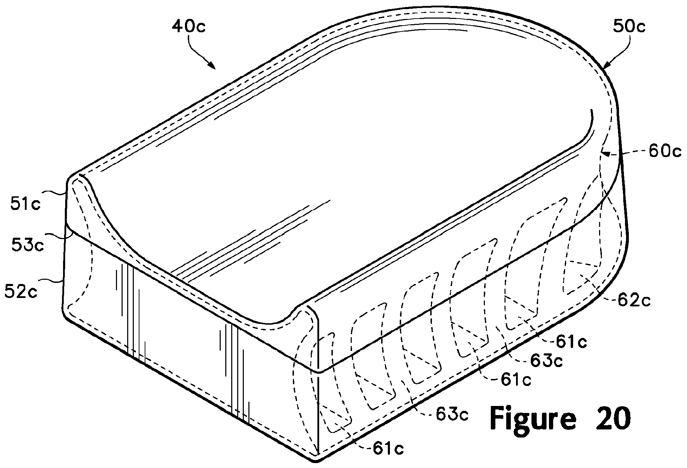

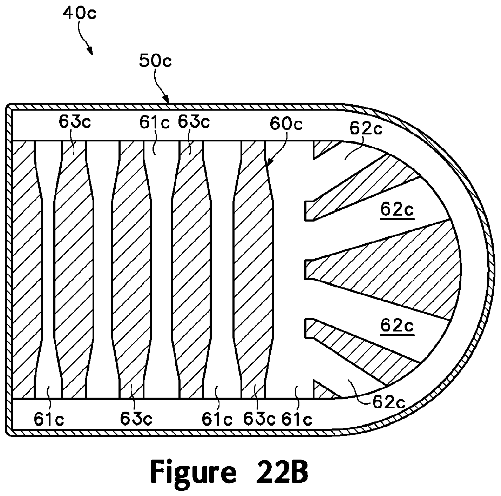

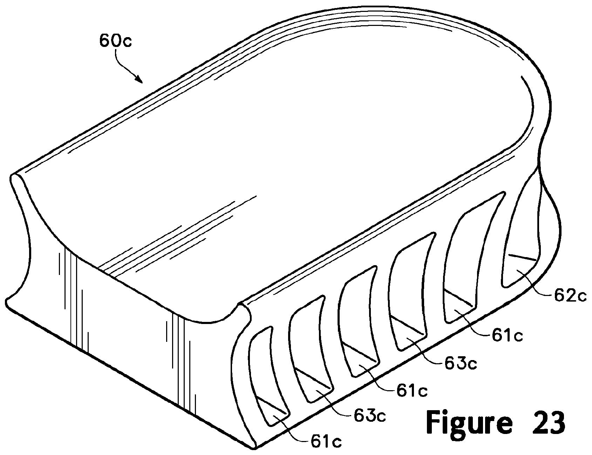

With reference to Figures 20-23, another bladder 40c is depicted as including an outer barrier 50c and a tensile member 60c. As with the prior embodiments, barrier 50c includes a first barrier layer 51c and a second barrier layer 52c that are substantially impermeable to a pressurized fluid contained by bladder 40c. The pressurized fluid contained by bladder 40c induces an outward force upon barrier 50c and tends to separate or otherwise press outward upon first barrier layer 51c and second barrier layer 52c. Tensile member 60c, however, is bonded to each of first barrier layer 51c and second barrier layer 52c and is placed in tension by the pressurized fluid, thereby restraining outward movement of barrier 50c.

First barrier layer 51c and second barrier layer 52c are bonded together around their respective peripheries to form a peripheral bond 53c and cooperatively form a sealed chamber, in which tensile member 60c and the pressurized fluid are located. Suitable materials for barrier 50c include any of the materials discussed above with respect to barrier 50. Tensile member 60c is a polymer foam member that is bonded to barrier 50c. Although adhesive bonding may be utilized to secure barrier 50c and tensile member 60c, direct bonding may also be suitable when both barrier 50c and tensile member 60c are formed from thermoplastic polymers. Accordingly, the polymer foam material of tensile member 60c may be the thermoplastic polyurethane foam manufactured by Huntsman International, L.L.C. under the SMARTLITE trademark, or may also be the material produced through the process developed by Trexel, Incorporated and marketed under the MUCELL trademark. Other suitable foams, whether thermoplastic or thermoset, may be utilized for tensile member 60c.

Tensile member 60c includes an upper surface with a concave configuration, and tensile member 60c includes a lower surface that is generally planar. The concave configuration of the upper surface provides bladder 40c with a concave upper area that joins with an upper and forms a depression for securely receiving the heel of the wearer. Similarly, the planar lower surface provides bladder 40c with a generally planar configuration that joins with an outsole and forms a surface for contacting the ground. The various contours for the surfaces of tensile member 60c may, however, vary significantly from the configuration discussed above.

Tensile member 60c includes a plurality of channels 61c and 62c that extend through or at least partially into the polymer foam material and form columns 63c that extend between upper and lower portions of tensile member 60c. Channels 61c extend laterally between the sides of tensile member 60c. Channels 62c extend into the polymer foam material in the rear portion and form a radial configuration. That is, channels 62c extend into the polymer foam material around the semi-circular rear portion of tensile member 60c, and channels 62c intersect the rear-most channel 61c. In contrast with tensile member 60b, tensile member 60c is not depicted as having channels that extend longitudinally, but may have longitudinal channels in further embodiments. Channels 61c and 62c increase the compressibility of tensile member 60c and decrease the overall weight of bladder 40c.

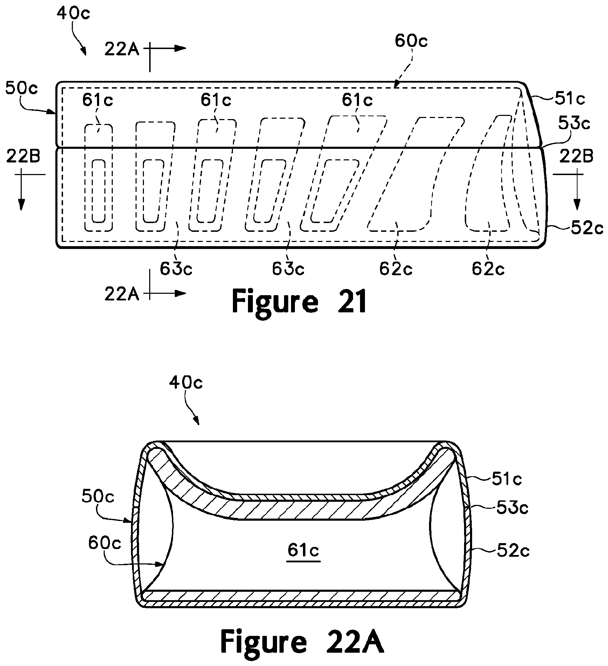

Channels 61c and 62c are configured to selectively increase or vary the compressibility of tensile member 60c in different areas. Referring to Figure 21, the channel 61c in a front area of tensile member 60c is vertically-oriented. Subsequent channels 61c, however, become increasingly diagonal or otherwise non-vertical as channels 61c extend rearward. In addition, the various columns 63c also tend to become more non-vertical in the rear area than in the front area. In compression, vertical columns 63c will generally provide greater support than non-vertical or diagonal columns 63c. Accordingly, the orientation of channels 63c may be utilized to affect or otherwise configure the compressibility of bladder 40c in various areas. Furthermore, channels 62c may also exhibit a non-vertical orientation to further increase the compressibility of bladder 40c in the rear area.

The upper and lower surfaces of tensile member 60c are bonded to barrier 50c. The side surfaces of tensile member 60c may, however, remain unbonded to barrier 50c. The sidewalls of bladder 40c may bulge or otherwise protrude outward due to the pressure of the fluid within bladder 40c. In some embodiments, the side surfaces of tensile member 60c may be entirely or partially bonded to barrier 50c.

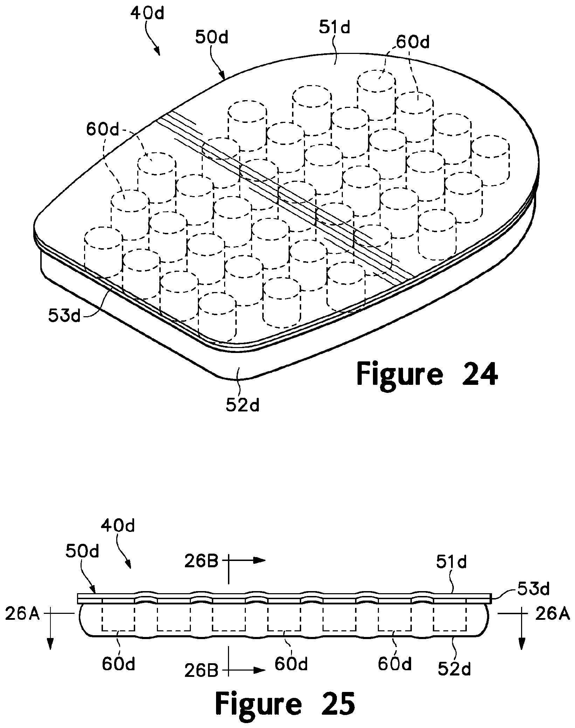

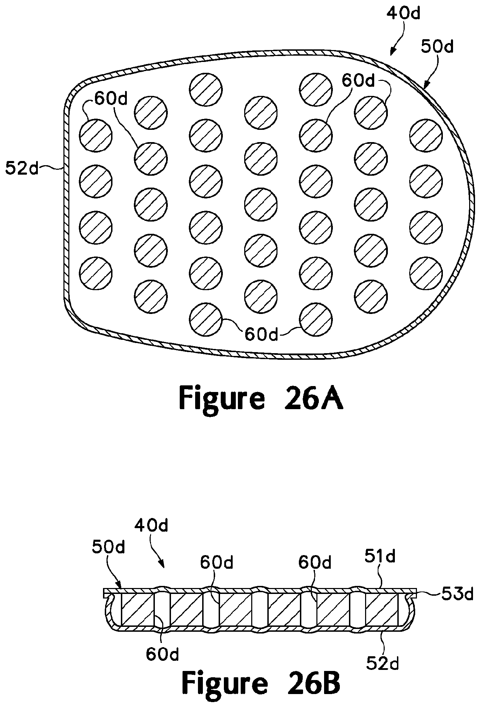

With reference to Figures 24-26B, a bladder 40d is depicted as including an outer barrier 50d and a plurality of tensile members 60d. Barrier 50d includes a first barrier layer 51d and a second barrier layer 52d that are substantially impermeable to a pressurized fluid contained by bladder 40d. First barrier layer 51d and second barrier layer 52d are bonded together around their respective peripheries to form a peripheral bond 53d and cooperatively form a sealed chamber, in which tensile members 60d and the pressurized fluid are located.

Tensile members 60d are a plurality of discrete foam members, which may have the configuration of columns, that are bonded to each of first barrier layer 51d and second barrier layer 52d. Tensile member 60d are depicted as having generally uniform dimensions, but may have different dimensions, such as height and thickness, within the scope of the present invention. The upper and lower surface of tensile members 60d are generally planar and parallel, but may also be contoured to provide a shape to bladder 40d.

The pressurized fluid contained by bladder 40d induces an outward force upon barrier 50d and tends to separate or otherwise press outward upon first barrier layer 51d and second barrier layer 52d. Tensile members 60d are each placed in tension by the fluid and retain the generally flat configuration of bladder 40d that is depicted in the figures. As with bladder 40, direct bonding may be an effective manner of securing barrier 50d and tensile members 60d.

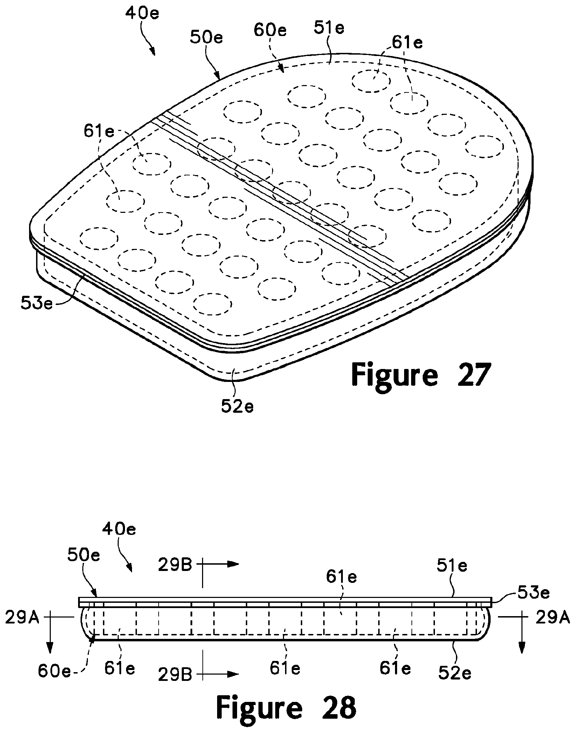

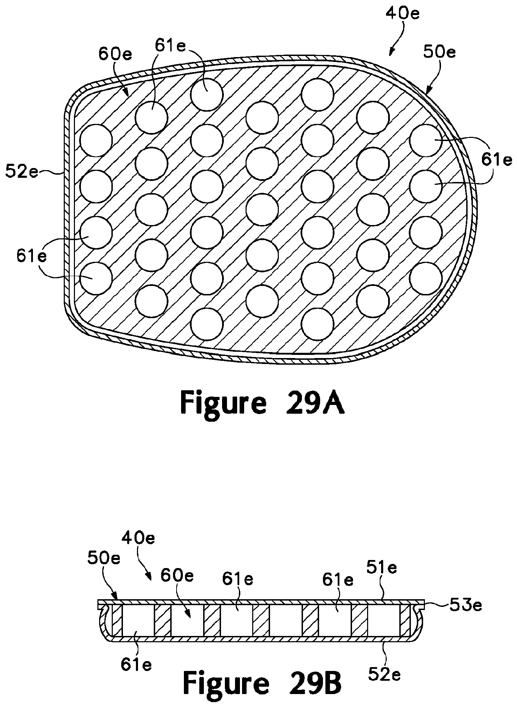

A bladder 40e is depicted in Figures 27-29A and has the general configuration of bladder 40, as discussed above. Accordingly, bladder 40e includes an outer barrier 50e and a tensile member 60e. Barrier 50e includes a first barrier layer 51e and a second barrier layer 52e that are substantially impermeable to a pressurized fluid contained by bladder 40e. First barrier layer 51e and second barrier layer 52e are bonded together around their respective peripheries to form a peripheral bond 53e and cooperatively form a sealed chamber, in which tensile member 60e and the pressurized fluid are located.

Tensile member 60e is a foam member that is bonded to each of first barrier layer 51e and second barrier layer 52e. The upper and lower surface of tensile member 60e are generally planar and parallel, but may also be contoured. In contrast with bladder 40, and more particularly tensile member 60, tensile member 60e defines a plurality of channels 61e that extend vertically through tensile member 60e.

The pressurized fluid contained by bladder 40e induces an outward force upon barrier 50e and tends to separate or otherwise press outward upon first barrier layer 51e and second barrier layer 52e. Tensile member 60e is placed in tension by the fluid and retains the generally flat configuration of bladder 40e that is depicted in the figures. As with bladder 40, direct bonding may be an effective manner of securing barrier 50e and tensile member 60e.

A variety of manufacturing processes may be utilized to form the various tensile members 60 and 60a-60e discussed above. For example, tensile members 60 and 60a-60e may be cut or otherwise fashioned from a block of polymer material, or one of a variety of molding processes may be utilized. As an example, the above discussion noted that tensile member 60b may be formed through an injection molding process wherein the polymer foam is injected into a mold having a void with the general shape of tensile member 60b. Similarly, tensile members 60, 60a, and 60c-60e may be formed through an injection molding process wherein the polymer foam is injected into a mold having a void with the general shape of one of tensile members 60, 60a, and 60c-60e. Molding processes other than injection molding may also be utilized.

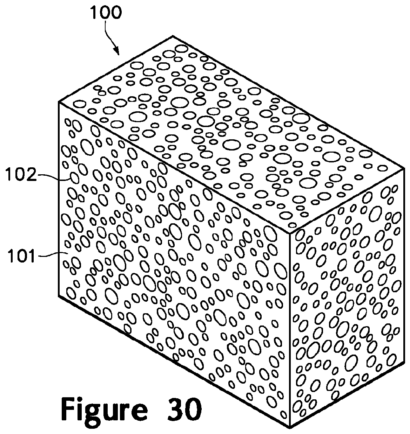

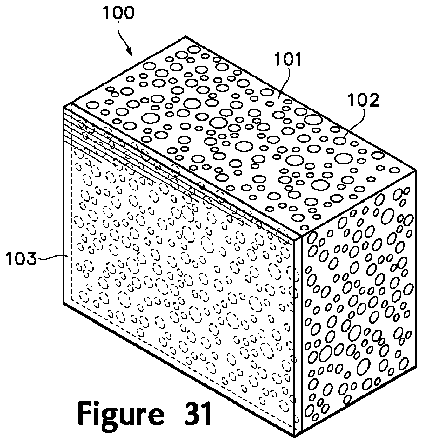

The mold utilized for forming the various tensile members 60 and 60a-60e may be machined or cast from a variety of materials, including steel, aluminum, or polymer materials, for example. According to the invention, the mold may also be formed from a cellular structure metal material 100, as depicted in Figures 30 and 31. As known in the art, cellular structure metal material 100 is primarily formed from a metal base member 101 (e.g., a metal, metal alloy, amorphous metal, amorphous metal alloy, or combination thereof) that includes various voids 102 (e.g., cells or pores) formed therein. Similar to a polymer foam that includes a base polymer with various pores, cellular structure metal material 100 includes base member 101 and the voids 102. Like a polymer foam, therefore, cellular structure metal material 100 defines the various voids 102, which form fluid-filled (e.g., air, gas, liquid) cells that reduce the overall density of cellular structure metal material 100 in comparison with the base metal. Accordingly, cellular structure metal material 100 may also be referred to as a cellular foam or a cellular metal foam.

Cellular structure metal material 100 may have a density that ranges between two percent and ninety-eight percent of the density of the base metal without the cellular structure. In comparison with a non-cellular metal, therefore, the density of cellular structure metal material 100 may be two percent, ten percent, twenty-five percent, fifty percent, seventy-five percent, or ninety-five percent, for example, of the density of the same metal material without a cellular structure. Despite the reduced amount of structural material due to the presence of voids 102, the resulting material of cellular structure metal material 100 maintains sufficient physical properties, such as strength, rigidity, and deformation resistance, for use in a mold for tensile members 60 and 60a-60e.

Cellular structure metal material 100 may have an open cellular structure or a closed cellular structure. In the open cellular structure, voids 102 may interconnect or otherwise be in fluid communication. As an example, air may pass through cellular structure metal material 100 due to the interconnecting voids 102, thereby giving cellular structure metal material 100 a porous or air-permeable property. In the closed cellular structure, however, voids 102 may be closed so as to prevent fluid communication. Any desired size range for voids 102 may be used in cellular structure metal material 100. Cellular structure metal material 100 may also have any desired size distribution for voids 102, multiple size distributions for voids 102, or no readily discernable size distribution for voids 102.

As illustrated in Figure 30, voids 102 may be generally formed throughout the three dimensional structure of the base member 101. One or more surfaces of cellular structure metal material 100 may remain exposed when cellular structure metal material 100 is formed into at least a portion of a mold. According to the invention, one or more of the porous surfaces may be covered or enclosed. Figure 31 depicts another configuration of cellular structure metal material 100 in which voids 102 are enclosed in or covered by (e.g., coated, impregnated, filled, and/or overlaid) a cover layer 103. In this manner, an exposed surface of cellular structure metal material 100 does not include exposed voids 102, thereby presenting a smooth, consistent surface and/or appearance to the mold. This type of filled structure also may be referred to herein as a cellular structure metal material composite. The cover layer 103 may have any desired thickness (e.g., from 10 Angstroms to 4 cm or a varying thickness). The cover layer 103 also may directly follow the shape or contours of the underlying base member 101. Cover layer 103 may be formed from a polymer material, or cover layer 103 may be integrally formed with base member 101 as a thin, solid sheet of the same metal material as that making up base member 101. As a specific example, cover layer 103 may be a thin aluminum layer integrally formed as a one piece construction with an aluminum base member 101.

While any desired type of metal or other material may be used for base member 101, more specific examples of suitable metal materials include aluminum, titanium, nickel, copper, zinc, carbon, zirconium, tungsten, lead, molybdenum, and/or combinations and alloys thereof (such as nickel-aluminum alloys, pewter, brass, etc.). Also, any desired method of making the cellular structure material may be used without departing from the invention, including conventional ways that are known and used by commercial vendors of cellular structure metal materials, such as: ALM (Applied Lightweight Materials) GmbH of Saarbrücken, Germany; Alulight International GmbH of Ranshofen, Austria; Cymat Corporation of Mississauga, Ontario, Canada; ERG Materials and Aerospace Corporation of Oakland, California; Foamtech Co., Ltd. of Seoul, Korea; FiberNide Ltd. of Ontario, Canada; Gleich GmbH of Kaltenkirchen, Germany; Hütte Klein-Reichenbach Ges.m.b.H of Schwarzenau, Austria; Inco Ltd. of Toronto, Ontario, Canada; Korea Metalfoam of Choenan, Korea; Mitsubishi Materials Corporation of Okegawa-shi, Japan; M-Pore GmbH of Dresden, Germany; Porvair Advanced Materials of Hendersonville, NC; Recemat International B.V. of the Netherlands; Reade Advanced Materials of Providence, RI; Spectra-Mat, Inc. of Watsonville, CA; SAS Solea of Boussens, France; and Ultramet Corporation of Pacoima, CA. In addition, the various materials and methods of making them are described in U.S. Patent Numbers 6,932,146; 6,866,084; 6,840,301, 6,706,239; 6,592,787; 5,951,791; 5,700,363; and 4,957,543.

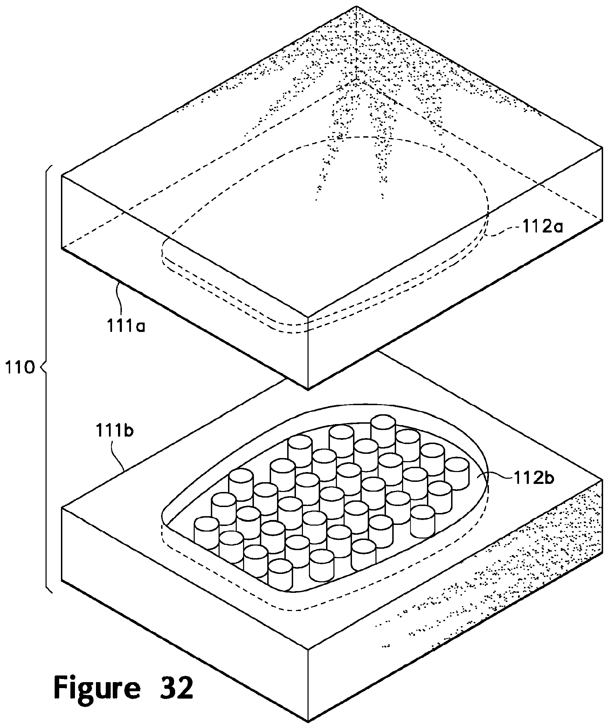

With reference to Figure 32, a mold 110 is depicted as having a first mold portion 111a and a corresponding second mold portion 111b. First mold portion 111a includes a recess 112a, and second mold portion 111b includes a recess 112b. When joined together, recesses 112a and 112b cooperatively form a cavity having dimensions substantially equal to the exterior dimensions of tensile members 60e. Other mold portions having a cavity with the shapes of any of tensile members 60 and 60a-60d may also be utilized.

Mold portions 111a and 111b are at least partially formed from cellular structure metal material 100. As discussed above, cellular structure metal material 100 may have an open cellular structure, wherein voids 102 may interconnect or otherwise be in fluid communication. In the open cellular structure, air may pass through cellular structure metal material 100 due to the interconnecting voids 102, thereby giving cellular structure metal material 100 a porous or air-permeable property. Many molds formed from solid metals incorporate vents that permit air or other fluids to escape the molds. The porous or air-permeable property of cellular structure metal material 100 permits vents to be absent from mold 110. That is, the interconnecting voids 102 may be sufficient, without vents, to permit air or other fluids to escape mold 110 when forming tensile member 60e or one of tensile members 60 and 60a-60d. Although vents are not necessary in mold 110, vents may be utilized to supplement voids 102. If, for example, mold 110 is formed from cellular structure metal material 100 having a closed cellular structure or cellular structure metal material 100 having cover layer 103, then vents may be utilized.

When gas is trapped within a mold cavity, higher injection pressures are utilized to displace the gas, which results in greater foam density. Experimental testing comparing (a) a mold formed from a solid metal with vents and (b) a mold formed from cellular structure metal material 100 having an open cellular structure without vents demonstrated differences in the properties of foam elements formed with the molds. More particularly, foam elements produced from a mold formed from cellular structure metal material 100 having an open cellular structure without vents exhibited a twenty percent reduction in density in comparison with foam elements produced from a mold formed from a solid metal with vents. That is, using cellular structure metal material 100 yielded foam elements with lesser density. An explanation for the differences in density relates to venting. In general, cellular structure metal material 100 better facilitates the transmission of air or other gasses from the cavity within the mold to the exterior. That is, lower injection pressures may be utilized because the greater venting permits trapped gas to more easily escape.

Another advantage to forming mold 110 from cellular structure metal material 100 relates to the overall mass of mold 110. As noted above, the density of cellular structure metal material 100 may be two percent, ten percent, twenty-five percent, fifty percent, seventy-five percent, or ninety-five percent, for example, of the density of the same metal material without a cellular structure. If, for example, mold 110 is formed from steel having a density of fifty percent of the density of the same metal material without a cellular structure, then the resulting mass of mold 110 would be one-half the mass of a mold formed from the same metal material without a cellular structure.

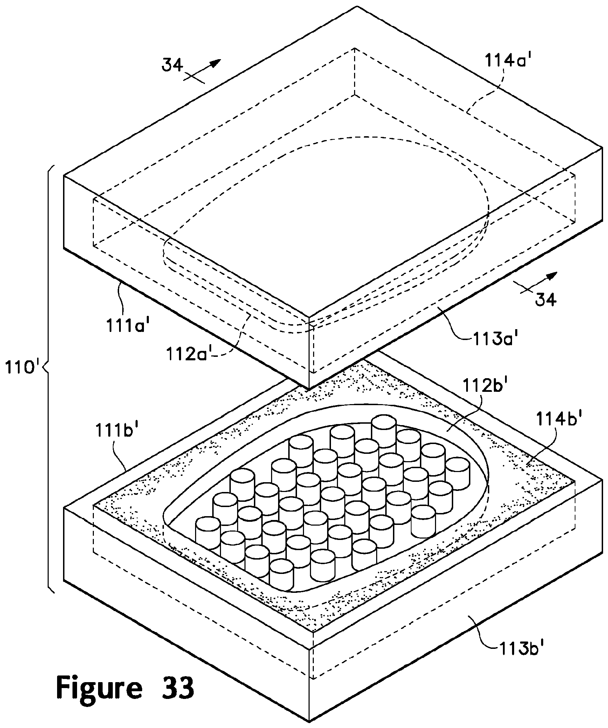

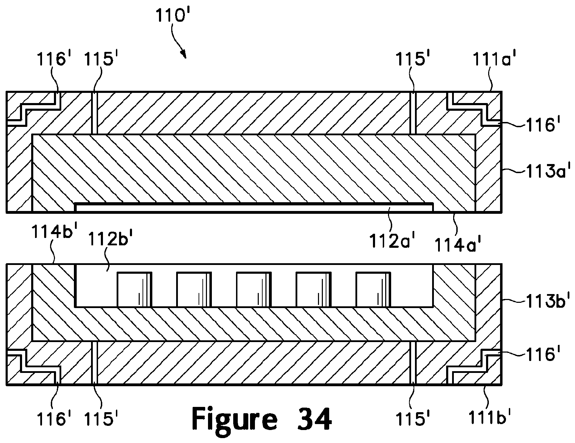

Mold 110 is depicted in Figure 32 as being substantially formed from cellular structure metal material 100. With reference to Figures 33 and 34, a mold 110' is depicted as having a pair of mold portions 111a' and 111b' that respectively define recesses 112a' and 112b'. Whereas mold portions 111a and 111b are substantially formed from cellular structure metal material 100, only the areas of mold portions 111a' and 111b' that define recesses 112a' and 112b' are formed from cellular structure metal material 100. That is, mold portion 111a' includes (a) a primary mold portion 113a' formed from a solid metal material and (b) an insert mold portion 114a' formed from cellular structure metal material 100. Similarly, mold portion 111b' includes (a) a primary mold portion 113b' formed from the solid metal material and (b) an insert mold portion 114b' formed from cellular structure metal material 100. Mold 110' is, therefore, only partially formed from cellular structure metal material 100. In order to permit a maximum degree of venting to occur through voids 102, portions of mold 110' that form surfaces of recesses 112a' and 112b' are formed from cellular structure metal material 100, and various vents 115' run through each of primary mold portions 113a' and 113b' to provide venting of air within recesses 112a' and 112b'. In addition, cooling lines 116' run through each of primary mold portions 113a' and 113b' to provide cooling. In some configurations, surfaces of recesses 112a and 112b may be partially formed from a solid metal material or from cellular structure metal material 100 having cover layer 103.

Insert mold portions 114a' and 114b' may be permanently secured within primary mold portions 113a' and 113b'. In some configurations, insert mold portions 114a' and 114b' may be removable from primary mold portions 113a' and 113b' to allow for interchangeability. For example, if cellular structure metal material 100 becomes damaged, saturated with a polymer material, or no longer needed, insert mold portions 114a' and 114b' may be removed. Also, if a footwear element having a different shape than is provided by recesses 112a' and 112b' of insert mold portions 114a' and 114b', then insert mold portions 114a' and 114b' may be exchanged with other insert mold portions. Accordingly, an advantage of the configuration depicted in Figure 33 is that the portions of mold 110' formed from cellular structure metal material 100 may be removable inserts that may be interchanged with other inserts.

Primary mold portions 113a' and 113b' extend around sides of insert mold portions 114a' and 114b'. As depicted, only one surface of each of insert mold portions 114a' and 114b' (i.e., the surfaces that define recesses 112a' and 112b') are exposed. This configuration serves to protect insert mold portions 114a' and 114b'. In comparison with the solid metal material of primary mold portions 113a' and 113b', cellular structure metal material 100 of insert mold portions 114a' and 114b' may be more fragile. Accordingly, primary mold portions 113a' and 113b' may provide protection to insert mold portions 114a' and 114b' as mold portions 111a' and 111b' are opened and closed repeatedly during the manufacturing process.

The above discussion relates to the use of mold 110 to form a polymer foam element for a footwear bladder. A mold having the general characteristics of mold 110 (i.e., a mold incorporating cellular structure metal material 100) may also be utilized to form other footwear components, including a midsole, an outsole, an insole, or components of an upper. Alternately, a mold having the general characteristics of mold 110 may be utilized to form components (a) for non-footwear applications or (b) from non-foam polymers. Accordingly, a mold incorporating cellular structure metal material 100 may be utilized for a variety of footwear components, as well as non-footwear elements and non-foam elements.

## Claims

1. A method of manufacturing a polymer foam tensile member for a fluid-filled bladder, the method comprising steps of:
providing a mold (110,110') at least partially formed from a cellular structure metal material and having a cavity (112a,112b,112a',112b') with a shape of the polymer foam element; providing a cover layer (103) that covers voids of the cellular structure metal material; and
locating a polymer foam material within the cavity.

2. The method recited in claim 1, wherein the step of providing includes imparting an open cellular structure to the cellular structure metal material.

3. The method recited in claim 1, wherein the step of providing includes structuring the mold to include vents.

4. The method recited in claim 1, wherein the step of providing the cover layer includes providing the cavity with a layer of material.

5. The method recited in claim 4, wherein providing the cavity with the cover layer includes providing the cavity with a consistent surface via the cover layer.

6. The method recited in claim 1, wherein providing the cover layer includes providing a layer of material that is different than the material of the cellular structure metal material.

7. The method recited in claim 4, wherein providing the cover layer includes providing a layer of material that is the same material as the material of the cellular structure metal material.

8. A mold for manufacturing a polymer foam tensile member for a fluid-filled bladder comprising:
a first mold element having a first primary portion (113a') and a first insert portion (114a'), the first primary portion being formed of a solid metal material, and the first insert portion being formed of a cellular structure metal material; and
a second mold element having a second primary portion (113b') and a second insert portion (114b'), the second primary portion being formed of the solid metal material, and the second insert portion being formed of the cellular structure metal material,
the first insert portion and the second insert portion cooperatively defining a cavity for receiving a polymer material and including a cover layer (103) that covers voids of the cellular structure metal material.

9. The mold recited in claim 8 wherein the cover layer is formed from the same material as the solid metal material.

10. The mold recited in claim 8 wherein the cover layer is formed from a different material than the solid metal material.

## Patentansprüche

1. Verfahren zur Herstellung eines zugfesten Polymerschaumglieds für eine fluidgefüllte Blase, wobei das Verfahren die Schritte aufweist:
Bereitstellen einer Gussform (110, 110'), die mindestens teilweise aus einem Zellstruktur-Metallmaterial gebildet ist und einen Hohlraum (112a, 112b, 112a', 112b') mit einer Form des Polymerschaumelements hat;
Bereitstellen einer Deckschicht (103), welche die Leerräume des Zellstruktur-Metallmaterials bedeckt; und
Anordnen eines Polymerschaumstoffs in dem Hohlraum.

2. Verfahren gemäß Anspruch 1, wobei der Schritt des Bereitstellens umfasst, dem Zellstruktur-Metallmaterial eine offenzellige Struktur zu verleihen.

3. Verfahren gemäß Anspruch 1, wobei der Schritt des Bereitstellens umfasst, die Gussform mit Luftöffnungen zu strukturieren.

4. Verfahren gemäß Anspruch 1, wobei der Schritt des Bereitstellens der Deckschicht umfasst, den Hohlraum mit einer Materialschicht zu versehen.

5. Verfahren gemäß Anspruch 4, wobei das Versehen des Hohlraums mit der Deckschicht umfasst, den Hohlraum über die Deckschicht mit einer einheitlichen Oberfläche zu versehen.

6. Verfahren gemäß Anspruch 1, wobei das Bereitstellen der Deckschicht umfasst, eine Materialschicht bereitzustellen, die sich von dem Material des Zellstruktur-Metallmaterials unterscheidet.

7. Verfahren gemäß Anspruch 4, wobei das Bereitstellen der Deckschicht umfasst, eine Materialschicht bereitzustellen, die aus dem gleichen Material wie das Zellstruktur-Metallmaterial besteht.

8. Gussform zur Herstellung eines zugfesten Polymerschaumglieds für eine fluidgefüllte Blase, aufweisend:
ein erstes Gussformelement mit einem ersten Hauptabschnitt (113a') und einem ersten Einsatzabschnitt (114a'), wobei der erste Hauptabschnitt aus einem massiven Metallmaterial gebildet ist und der erste Einsatzabschnitt aus einem Zellstruktur-Metallmaterial gebildet ist; und
ein zweites Gussformelement mit einem zweiten Hauptabschnitt (113b') und einem zweiten Einsatzabschnitt (114b'), wobei der zweite Hauptabschnitt aus dem massiven Metallmaterial gebildet ist und der zweite Einsatzabschnitt aus dem Zellstruktur-Metallmaterial gebildet ist,
wobei der erste Einsatzabschnitt und der zweite Einsatzabschnitt gemeinsam einen Hohlraum zur Aufnahme eines Polymermaterials und mit einer Deckschicht (103) bestimmen, die Leerräume des Zellstruktur-Metallmaterials bedeckt.

9. Gussform gemäß Anspruch 8, wobei die Deckschicht aus dem gleichen Material wie dem massiven Metallmaterial gebildet ist.

10. Gussform gemäß Anspruch 8, wobei die Deckschicht aus einem anderen Material als dem massiven Metallmaterial gebildet ist.

## Revendications

1. Procédé de fabrication d'un élément extensible en mousse polymère destiné à une vessie remplie de fluide, comprenant des étapes consistant à :
se procurer un moule (110, 110') au moins partiellement réalisé en un matériau métallique à structure cellulaire et comportant une cavité (112a, 112b, 112a', 112b') ayant la forme de l'élément en mousse polymère,
se procurer une couche de couverture (103) qui recouvre les vides du matériau métallique ayant une structure cellulaire, et
positionner un matériau en mousse polymère dans la cavité.

2. Procédé conforme à la revendication 1,
selon lequel l'étape consistant à se procurer le moule comprend le fait de conférer une structure cellulaire ouverte au matériau métallique ayant une structure cellulaire.

3. Procédé conforme à la revendication 1,
selon lequel l'étape consistant à se procurer le moule comprend la structuration de ce moule pour qu'il comporte des évents.

4. Procédé conforme à la revendication 1,
selon lequel l'étape consistant à se procurer la couche de couverture comprend le fait d'équiper la cavité d'une couche de matériau.

5. Procédé conforme à la revendication 4,
selon lequel l'étape consistant à équiper la cavité d'une couche de couverture comprend le fait d'équiper la cavité d'une surface uniforme par l'intermédiaire de la couche de couverture.

6. Procédé conforme à la revendication 1,
selon lequel l'étape consistant à se procurer la couche de couverture comprend le fait de se procurer une couche d'un matériau différent du matériau constitutif du matériau métallique ayant une structure cellulaire.

7. Procédé conforme à la revendication 4,
selon lequel l'étape consistant à se procurer la couche de couverture comprend le fait de se procurer une couche du même matériau que le matériau constitutif du matériau métallique ayant une structure cellulaire.

8. Moule permettant la fabrication d'un élément extensible en mousse polymère destiné à une vessie remplie de fluide comprenant :
un premier élément de moule ayant une première partie primaire (113a') et une première partie d'insert (114a'),
la première partie primaire étant réalisée en un matériau métallique compact et la première partie d'insert étant réalisée en un matériau métallique ayant une structure cellulaire, et
un second élément de moule ayant une seconde partie primaire (113b') et une seconde partie d'insert (114b'),
la seconde partie primaire étant réalisée dans le matériau métallique compact et la seconde partie d'insert étant réalisée dans le matériau métallique ayant une structure cellulaire,
la première partie d'insert et la seconde partie d'insert définissant conjointement une cavité permettant de recevoir un matériau polymère et comprenant une couche de couverture (103) qui recouvre des vides du matériau métallique ayant une structure cellulaire.

9. Moule conforme à la revendication 8,
dans lequel la couche de couverture est réalisée dans le même matériau que le matériau métallique compact.

10. Moule conforme à la revendication 8,
dans lequel la couche de couverture est réalisée dans un matériau différent du matériau métallique compact.
